# EUROPEAN PATENT APPLICATION

(11) **EP 2 098 956 A1**
(43) Date of publication of application: **09.09.2009**
(21) Application number: 08250724.5
(22) Date of filing: 03.03.2008
(51) Int. Cl.: G06F 9/50

(54) **Computing system and method for managing a server pool**

(71) Applicant: British Telecommunications Public Limited Company, London Greater London EC1A 7AJ (GB)
(72) Inventor: The designation of the inventor has not yet been filed
(74) Representative: Lidbetter, Timothy Guy Edwin

(57) **Abstract**

A data centre is disclosed in which an administrator is provided with an administration computer 50 which keeps a record of which of a pool of computers shared between a set of applications currently has each of a number of different software configurations. Those software configurations vary in the degree to which they are specialised to a given application or a subset of the applications supported by the pool of computers. By keeping some of the pool of computers with a software configuration which can be augmented in order to provide a subset of the supported applications, the subset of computers having that configuration can be shared between a subset of the applications supported by the pool. Because the amount of extra software required to reprogram one of those computers to provide a specific one of the subset of applications is only a fraction of the amount of software required to program a computer to provide the application, delay bounds on the deployment of one or more computers to a given application can be met whilst still allowing the sharing of resources between the subset of applications. This enables a more efficient utilisation of the computers in the data centre, and thus reduces the energy required by the data centre to support a given number of applications.

## Description

The present invention relates to a computing system and method of operation of a computing system. The invention has particular utility in data centres.

The advent of the World Wide Web has brought on tremendous growth in the size and number of data centres.

The use of energy in data centres is a problem of growing importance. The US Environmental Protection Agency's 'Report to Congress on Server and Data Center Energy Efficiency Public Law 109-431' of August 2007 estimates that data centres in the United States consumed 61 billion kilowatt-hours of electrical energy in 2006. The report states that accounts for 1.5% of total US electricity consumption and indicates that the electricity consumption by data centres could double again by 2011 unless the efficiency of data centre operation is improved. It will be recognised that the electricity is consumed both to power computers in the data centres, and for cooling to counteract the heat given off by those computers in operation.

The report acknowledges that because energy efficiency is a secondary attribute of the equipment used in data centres, changes that might compromise performance will generally not be implemented.

The EPA report mentions that a commodity server with a typical utilisation of 5%-15% still consumes 60%-90% of its maximum system power.

A paper entitled "Adaptive Internet Data Centers" presented by Jerome Rolia et al, at SSGRR 2000 European Computer and eBusiness Conference, L'Aquila, Italy in July 2000, indicates that applications hosted in a data centre are typically organised into 'clusters' - which are groups of application components, each application component running on its own compute node. The size of such clusters can then be varied in dependence upon demand for the application in question. Load balancers can the evenly distribute the load of incoming requests between the compute nodes included within the cluster. Clustering can be applied at different tiers of a distributed application. For example a front-end cluster of web servers might send requests to a cluster of application server objects. Load balancing would similarly distribute those requests. Such dynamic allocation of resources to applications is supported by many data centre management systems. Such systems offer control and monitoring interfaces. The control interface can be used to cause a node to join or leave an application cluster with an appropriately configured application server object.

A further example of the dynamic allocation of physical resources between applications as demand for those applications rises and falls is seen in US patent application 2005/0182838 (Sheets et al). That patent proposes that servers in a so-called 'engine group' that provides resources to multiple customer accounts, might be moved between administrative groups of servers, each administrative group being dedicated to a given customer and thus to a given application. Moving servers from one administrative group to another involves an 'engine group manager' resetting pointers in the reallocated server(s) to point to an appropriate copy of the boot image software and configuration files including operating system and application programs, that have been established for the administrative group to which the server is to be reallocated. Also, in order to begin functioning as a new member of an administrative group, load-balancing and/or clustering software must recognise the rebooted server. The decision to move a server from one administrative group to another is made by a master decision software program which receives, from local decision software representing each administrative group, requests to add or delete servers to/from that administrative group. It uses a service level agreement database to decide whether to reallocate servers to a new administrative group. The local decision software decides to make such a request in dependence upon a plurality of performance indicators received from each blade server currently allocated to the administrative group. The master decision software program takes account of Service Level Agreements and a 'resource database' in some unspecified way. In order to speed the assignment of extra servers to a given customer, in some embodiments, it is suggested that a pool of spare servers might be available. Those which might or might not be pre-configured for joining one of the administrative groups (called warm and cold servers respectively). A warm server does not need to be rebooted in order to join an administrative group, whereas a cold server does.

US patent application 2004/0054780 (Romero) proposes 'Application Server Pools' which are similar to the administrative groups of US patent application 2005/0182838. US patent application 2004/0054780 also proposes the provision of a pool of spare servers and that 'Application Server Pools' should have a priority associated with them, with higher priority 'Application Server Pools' which provide below threshold Quality of Service being able to pre-emptively take servers from lower priority 'Application Server Pools' should the Free Server Pool prove to be empty at the relevant time. Each blade server has a server agent which measures performance of whatever application is running on the blade server. That performance is periodically reported to a management server. If the application is underperforming, and a server is available in the Free Server Pool, the management server causes a desired 'disk image' - containing another instance of the underperforming application (and possibly the operating system program required to support that application) - to be loaded onto a server in the Free Server Pool. The disk image is loaded via a provisioning line from an image repository. Alternatively, the management server selects a blade server in a lower priority Application Server Pool to be flushed, and after flushing the selected blade server's addressable memory and persistent storage, uses the rapid deployment service to cause the disk image to be loaded onto the selected blade server. Flushing the existing software and files provides both security (the new customer doesn't get access to the old customer's data) and improved performance (more memory is available for the new customer's application). In addition to loading the disk image, it is necessary to inform any traffic management device which routes input for the different applications, to which application the blade server is now dedicated.

Whilst computers can, by their nature, be re-programmed to provide different applications, there are unavoidable delays in doing so. In the above systems, those delays are reduced in some cases by providing servers with an application program, data files, and suitable configuration parameters, so that the server can be rapidly deployed to support that application. However, whilst this improves the speed of deployment of that application, it increases the number of servers required to support the applications and also the resources (for example, number of servers, electricity (for both computers and associated cooling equipment)) used by the system required to provide the applications.

According to a first aspect of the present invention there is provided a method of operating a group of interconnected computers to provide a plurality of applications between them, said method comprising:
dynamically allocating subsets of said interconnected computers to different states of readiness to deploy different applications in response to changing demand for said applications;
wherein said states of readiness include one or more intermediate states of readiness, computers in said intermediate states of readiness being partially prepared to deploy some but not all of said plurality of applications.

In a group of servers operated to provide a plurality of applications between them, as well as having some servers dedicated to an application and some servers free to provide any one of the applications, some servers are in intermediate states where they can be further configured / programmed to provide any one of a subset of the plurality of applications supported by that intermediate state. By having computers in said intermediate states of readiness, the delay in deploying one or more of the subset of the applications supported by said intermediate state of readiness can be kept within desired bounds without requiring a separate server ready to deploy each application in the subset of applications supported by computers in the intermediate state of readiness. In this way, the resources (for example, number of servers, electricity (for both computers and associated cooling equipment)) required to provide applications whilst keeping deployment delays within acceptable bounds are reduced.

For example, a group of servers might be shared between ten customer applications, six of which applications run on Windows Server software and four of which run on Linux software. Of the four Linux applications, two might require Tomcat Server software to be loaded. Thus, a server can be moved from an unspecialised, OS-free state, in which it may have further software added to it which will provide a server for any one of the ten customers, to an intermediate, more specialised, Linux-loaded state in which it could have further software added to it to provide a server for any one of four of the ten customers, to another intermediate, and yet more specialised, Linux + Tomcat loaded state in which further software could be added to provide a server for either of the two customers whose applications run on top of a Tomcat server program.

In general, this allows for a more fine-grained management of the shared server pool, which in turn increases the potential for efficient utilisation of the server pool.

Managing the pool of shared servers might for example, then be achieved by balancing the reduced delay which goes with increased specialisation (a more specialised server will require less software to be added before being deployable for a given customer), with the reduced flexibility which goes with increasing specialisation.

Preferably, said intermediate states of readiness include a state in which a service container, supported by an operating system program is running.
According to a second aspect of the present invention, there is provided a computer system comprising:
a group of interconnected computers arranged in operation to provide a plurality of applications between them;
an administration computer operably connected to said plurality of interconnected computers and arranged in operation to load software onto or remove software from one or more of said plurality of interconnected computers;
said administration computer maintaining a data structure which represents, for each of a number of different software configurations, the number of said plurality of interconnected computers which have that software configuration;
said administration computer utilising said data structure to dynamically bring subsets of said interconnecting computers to respective software configurations with some but not all of those subsets consisting of computers partially prepared to provide some but not all of the applications provided by said group of interconnected computers.

Preferably, said administration computer further maintains an administrator-editable rule store, and said administration computer is arranged in operation to allocate said computer to said subsets in dependence upon one or more rules in said rule store. This allows an administrator to alter the response of the computer system to changing application demand without the need to reprogram the administration computer.

There now follows, by way of example only, a description of embodiments of the present invention. The description makes reference to the accompanying drawings in which:
Figure 1 is a schematic drawing of a blade server;
Figure 2 is a cabinet containing two shelves of blade servers;
Figure 3 shows a data centre interconnected to application users by a wide-area network;

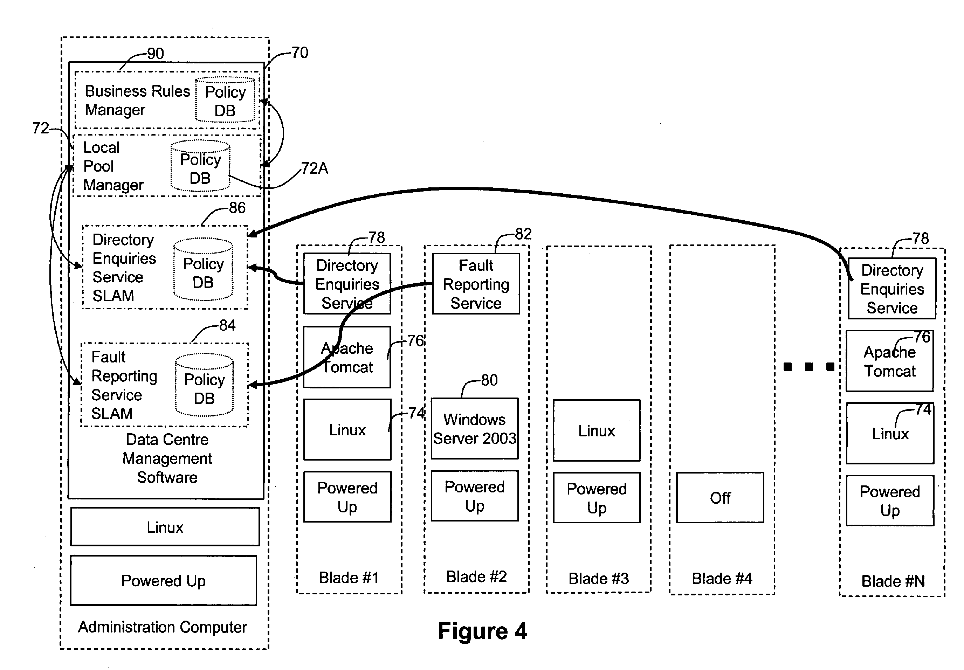

Figure 4 shows a plurality of blade servers running software to different levels of a software stack and software running on an associated administration computer;
Figure 5 is a state diagram represented in a data structure maintained by a server pool management component.

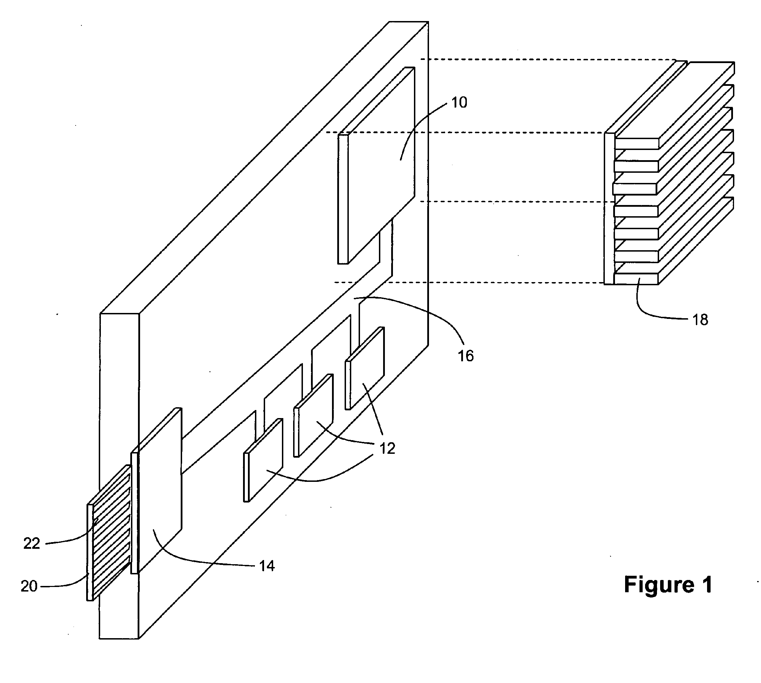

A blade server (Figure 1) - for example an HP Proliant BL25p Server Blade - is a printed circuit assembly having one or more microprocessor integrated circuits (IC) 10, volatile memory ICs 12, network interface cards 14 and communication busses 16 which provide for communication between those units. As will be understood in the art, many other components are present in the printed circuit assembly, and additional ICs are to be found on the side of the printed circuit assembly hidden in Figure 1. A modern processor IC can consume nearly 100W of power, nearly all of which will be output as heat energy. In order to help keep the operating temperatures of the integrated circuits 10, 12 within a preferred range, heat sinks 18 are attached to some ICs on the blade server.

The network interface card 14 includes edge connector 20. Data is input to and output from the blade server via some of the pads 22 on the edge connector 20. Power is supplied via other pads 22 on the edge connector 20 (normally different DC voltage levels are available on different pins). Those skilled in the art will realise that in practice many more pads 22 than shown in Figure 1 are provided.

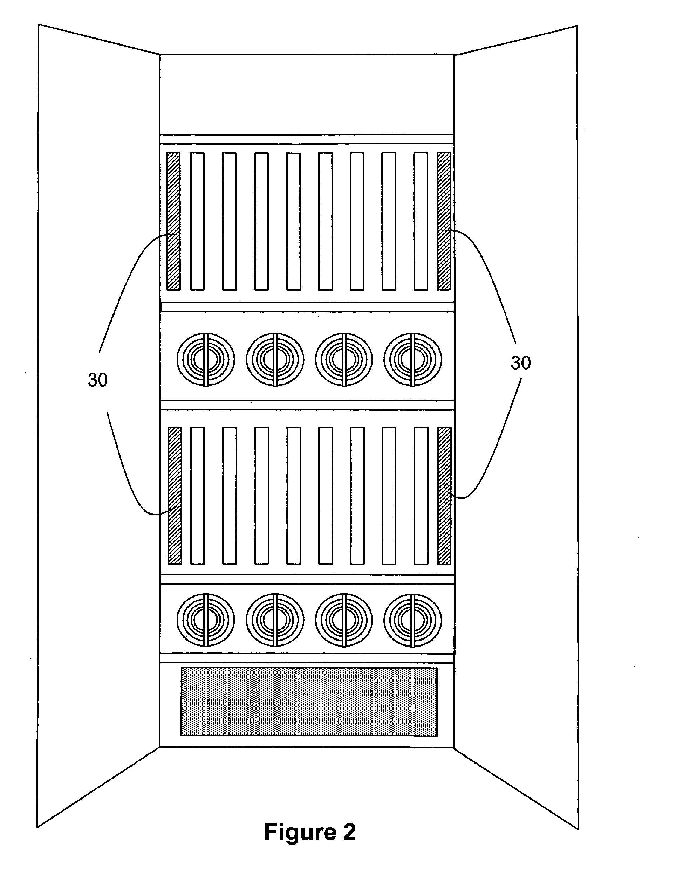

Figure 2 shows a blade server cabinet (for example a p-Class Server Blade Cabinet from HP) having five shelves. The cabinet includes a backplane (not shown) which provides data connections with the edge connectors 20 on each of the blade servers and also distributes DC power to the blade servers and switching units 30, and AC power to the fans 32.

The first and third shelves (counting from the top) each have a group of eight blade servers with a switching unit 30 on either side. The switching units route data signals from the backplane to and from communications links with other blade cabinets, storage devices, a data centre administration computer and with external networks.

The second and fourth shelves carry fans 32 for circulating air around the blade servers. The bottom shelf carries a power supply unit 30 which transforms an ordinary AC power supply to the cabinet to DC power for supply to each of the blade servers via the pads 22 on the blade server's edge connectors 20.

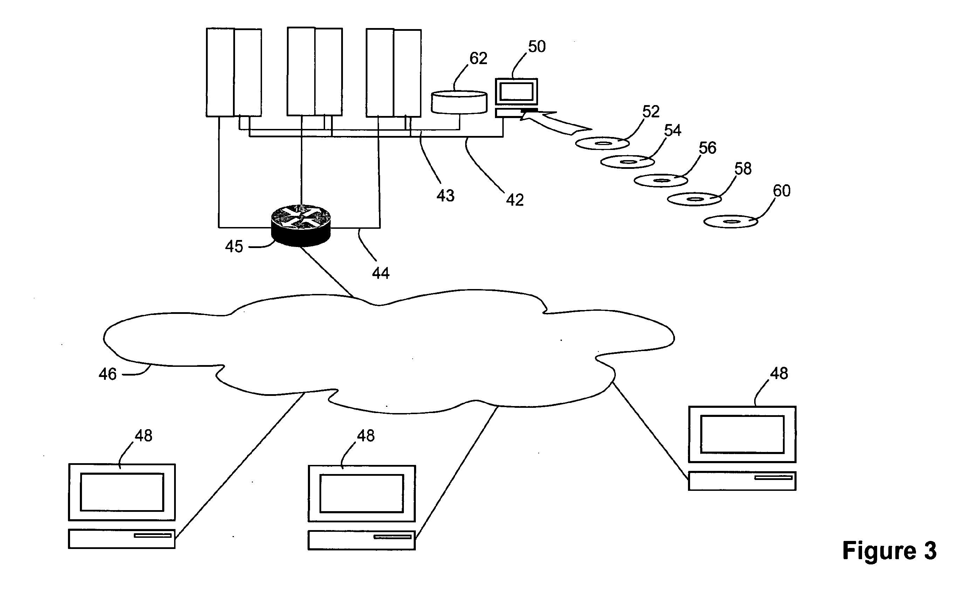

Figure 3 shows a data centre having a plurality of blade cabinets (Figure 2) interconnected to one another via an internal management network 42. The blade servers are also connected via links 43 to a RAID storage unit 62. A data centre manager is provided with a administration computer 50 connected to the internal management network 42 which allows administration of the blade servers in the data centre. The administration computer 50 has a pre-installed operating system program.

The switching units 30 of each blade cabinets are connected via a local area network 44 to a router 45 which connects the data centre to a wide-area network 46 (the global Internet in this particular example). Users are able to interact with web-based applications running on the data centre using personal computers 48 with access to the Internet 46.

At each data centre, the administrator loads blade centre management software 70 from CD-ROM 52 onto the administration computer 50. The blade centre management software is built on an API offered by VMware Lab Manager software from VMware Inc. 3401 Hillview Ave, Palo Alto, CA 94304. That API enables the data centre management software to install operating systems and to install and configure applications on selected servers within the data centre. Alternative embodiments might use the Opsware Server Automation System from Opsware Inc of 599 N. Mathilda Avenue, Sunnyvale, CA 94085.

The data centre management software 70 loaded onto administration computer 50 differs from conventional data centre management software in that it is supplied with a local server pool management component 72, and a business rules manager 90.

Both of these components can have one or more policies associated with them. Such policies are user-editable files which control the behaviour of the data centre management software and allow that behaviour to be changed without the need to re-compile the data centre management software and restart the administration computer 50.

The administrator then runs that software and loads a plurality of operating system programs (e.g. Windows Server 2003, Linux) from CD-ROM 54 into RAID storage 62.

Thereafter he loads a plurality of web server and application server programs from CD-ROM 56 into RAID storage 62.

In order to enable the production of dynamic web-pages, some web servers enable the running of other programs to respond to an HTTP request. For example, a web server might fork (i.e. create) a Common Gateway Interface process to generate a dynamic web page. Java Servlets provide similar functionality - each using one of a number of threads runnable within the server process - with a new thread being used to deal with each new HTTP request. Some application server programs (for example BEA WebLogic, and Apache Tomcat) include a container program that provides deployment and run-time support for application components. A container allows you to monitor and manage supported components as well as the service(s) that monitor and manage the components. A container can be any of the following:
- Connector container that hosts resource adapters
- Web container that hosts JSP, servlets, and static HTML pages
- EJB container that hosts EJB components

He yet further loads application programs, Java Servlets or application program components from CD-ROM 60 onto RAID storage 62. To give an example of the former, a web-based directory enquiries application and a web-based fault reporting service application might be loaded onto the RAID storage 62. The latter example will occur where a service-oriented software architecture is being followed in which distributed components are linked together by an application programmer to provide a distributed application program. As will be understood by those skilled in the art, such distributed application programs often require application framework, or middleware, such as the container programs mentioned above.

Each application program is also supplied with a Service Level Agreement Manager component. This component is loaded onto the administration computer 50 from CD-ROM 60 and forms part of the data centre management software 70. The component provides an interface allowing the administrator to view and edit a policy file which contains policies which reflect Service Level Agreements agreed between the customer and the data centre operator.

Each application on CD-ROM 60 includes a performance alerting function which sends an event message to the Service Level Agreement manager component 84,86 associated with the application when certain utilisation thresholds are passed (both in the direction of increasing utilisation and decreasing utilisation). The SLAM 84,86 reacts to such events in accordance with the policy associated with it.

Service Level Agreements for an application will set down, for each application program or program component, the goals (functional and non-functional) of the application / service together with the target level of service the data centre operator is expected to provide to the customer, and the penalties should that target level of service not be provided. SLA's will often include the obligations placed on the customer, which might include the peak demand for application expected or allowed. Obligations placed on the data centre operator might include maximum delay targets for provision of extra servers to support an application experiencing a rise in demand, as well as specifying recovery and repair times.

Having installed and run the data centre management program 70 on the administration computer 50, an administrator is able to respond to a request to host, for example, a web-based directory enquiries application by interacting with the administration computer 50. Firstly the administrator installs the Service Level Agreement manager component supplied with the application on CD-ROM 60 in the data centre management program. Thereafter, in order to configure the data centre system to provide the required service levels for the application given demand levels set out in the SLA, the administrator edits the policies associated with the Service Level Agreement manager for that application.

For example, he might enter a policy for a Directory Enquires application, as follows:
1. If load rises above 60% current capacity, make a provisional request to the Local Server pool manager 72 for more resources for Directory Enquiries application;
2. If load falls below 60% current capacity, cancel provisional request, previously made to the Local Server pool manager 72, for increase in resources for Directory Enquiries application.
3. If load rises above 80% current capacity, make firm request to the Local Server pool manager 72 for more resources for Directory Enquiries application and cancel provisional request;
4. If load falls below 80% current capacity, cancel firm request, previously made to Local Server pool manager 72, for increase in resources for Directory Enquiries application and re-instate provisional request.

In each case, the current capacity will represent the resources currently allocated to the application - for example, it might represent the number of servers currently running the application.

The Local Server pool manager 80 maintains a table (an example is shown in Table 1 below) which records the status of the blade servers in the data centre.

**Table 1**

| State of Readiness of Blade Server | No. of Blades Currently in State |
|---|---|
| Off | 85 |
| Windows Server 2003 running | 50 |
| Linux running | 40 |
| Windows Server 2003 + Apache Tomcat running | 12 |
| Windows Server 2003 + BEA WebLogic running | 15 |
| Linux + Apache Tomcat running | 8 |
| Linux + BEA WebLogic running | 13 |
| Windows Server 2003 + Application running | 122 |
| Linux + Application running | 131 |
| Windows Server 2003 + Apache Tomcat + Application running | 112 |
| Windows Server 2003 + BEA WebLogic + Application running | 160 |
| Linux + Apache Tomcat + Application running | 120 |
| Linux + BEA WebLogic + Application running | 132 |

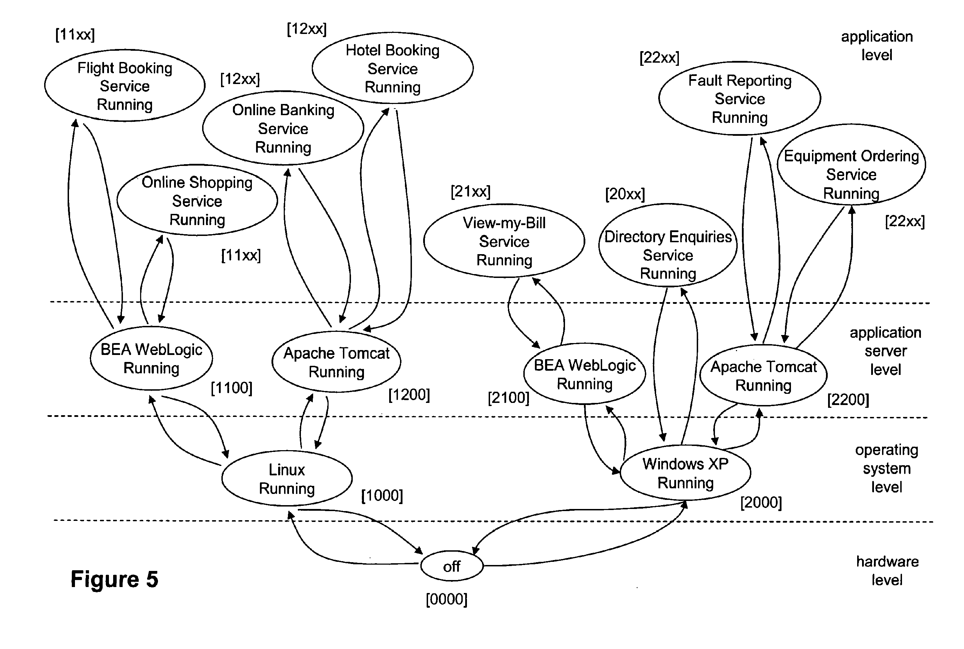

In addition to that, the Local Server pool manager maintains a data structure which might be visualised as a state diagram (Figure 5) which shows the states of readiness which a blade server might be in, and, for each state of readiness, transitions to more specialised states of readiness (moves towards the leaves of the tree), and/ or transitions to less specialised states of readiness (moves towards the root of the tree).

The Local Server pool manager 72 also has some local high speed storage for images and other software under its control.

Also associated with the Local Server pool manager 72 is a policy which is set by the administrator using administration computer 50 and stored in policy database 72A (stored on the administration computer's hard disk).

The administrator will first set application-specific deployment policies which indicate how the Local Server pool manager 72 should respond to a request to schedule and deploy a given application received via the administration computer 50. These policies will cause the Local Server pool manager 72 to respond by:
i) checking the availability of any specialised software components and retrieving any missing components and placing them in the local high-speed storage for rapid deployment.
ii) deploying nodes to relevant positions in the state of preparedness tree given the structure and timing constraints derived from the relevant SLA. For example, for a web-based directory enquiries application, the application-specific policy might indicate that two blade servers in the pool should be brought to the state 'running web-based directory' enquiries application' and that at least one server should be kept in the Windows XP running state to allow another instance of the directory enquiries application to be brought into operation should demand for the directory enquiries application increase.

When an application is scheduled and deployed the SLAM sends a message to the server pool manager informing it of the identity of the software deployed, that message then being responded to in accordance with the policies entered by the administrator.

In addition, application-specific variable demand handling policies are included by the administrator.

For example, such policies might include a policy that causes the administration computer 50 to respond to a provisional request for more resource for an application (received from the application's Service Level Agreement manager component) by checking for availability of the specialised software and if necessary prefetching it to the local high-speed storage mentioned earlier. If this software is not available, the policy might also indicate that relevant informational and/or error messages should then be propagated through the system.

A policy might be present, for example, which adds an extra machine to the Windows XP running state each time a message is received from the Directory Enquiries application's SLAM making a provisional request for more resource for the application. It will be understood from a review of Figure 5 that such a policy means that the system will request to a provisional request for more resources for the Directory Enquiries application by loading the operating system (Windows XP) on which that application runs onto one of the servers in the data centre. Doing so means that the thus-prepared servers can very quickly be provided with the additional software necessary to actually provide the Directory Enquiries application. The provision of a Windows XP machine will also quicken subsequent deployments of any of the other applications which run on Windows XP machines - i.e. the View-my-Bill, Fault-Reporting and Equipment Ordering applications in this example (again see Figure 5).

As well as application-specific policies, the administrator might enter policies which apply to all applications belonging to a certain class.

For example the administrator might include a policy which requires an extra machine in the Linux-running state for every three extant provisional requests from one of the applications running in the data centre built on Linux (e.g., in the example seen in Figure 5, the Flight Booking, Online Shopping, Online Banking and Hotel Booking applications).

Such a policy enables an example of statistical multiplexing of computing resources between applications.

The administrator will also enter policies which apply generally to the pool of servers managed by the Local Server pool manager 72.

For example, there may be policies in place which require a minimum of four servers to be held in the Linux-running state irrespective of application demand. More generally, other policies will cause any release of resource triggered by an applications Service Level Agreement manager component 84,86 to ripple down the state of preparedness tree as each level will have policies that count machines at that level and decrement or increment as required.

Those policies which change the population of the different states in the state of preparedness tree (i.e. the data seen in Table 1 above) by adding software to (e.g. installing software on) a blade server will include a call to the API on which the data centre management software is built which will change the population by loading operating system, middleware or application software from RAID storage 62 onto the blade server and thus moving the blade server to a node closer to the leaves of the state of preparedness tree (Figure 5). Correspondingly, policies which change the population of the different states in the state of preparedness tree by purging software from (e.g. uninstalling software on) a blade server will include a call to the API on which the data centre management software is built which will change the population by purging operating system, middleware or application software from the blade server and thus moving the blade server to a node closer to the root of the state of preparedness tree (Figure 5). The choice of which of a plurality of servers in a given state to re-program will be made by the local server pool manager 72.

The administrator also includes a policy which indicates that when an application's Service Level Agreement manager component requests more resource, and the Local Server pool manager is unable to fulfil the request, the Local Server pool manager is to send a message to the Business Rules Manager 90 with the identity of the application and customer, together with an SLA reference.

After the administrator has entered such policies in the policy databases, the Local Server pool manager 72, on receiving resource requests from a SLAM, queries its associated policy file to find any relevant policies and then acts in accordance with those policy to change the population of the different states of readiness within the local server pool.

The Local Server pool manager 72 will also have links to machine error messages and system health monitors so that machines either in use, or in the tree that develop problems can be demoted down the tree to a state where maintenance can be carried out.

In response to receiving a 'resource not available' message from a Local Server pool manager 72, the Business Rules Manager 90 might message the Service Level Application managers of other applications with instructions to release resources from other nodes of the state of preparedness tree or might instead just allow the application's Service Level Agreement to be violated.

It will be seen how the above embodiment keeps a number of servers in different intermediate states of readiness in which those servers can be quickly deployed for a plurality of applications. Because those servers are in a state in which they can quickly deployed for a plurality of applications, they can support service levels for a plurality of applications. Since it is unlikely that all of those applications will require extra resource at the same time, service levels can be provided with fewer servers, and less energy than has hitherto been possible.

Possible variants of the above embodiment include (this list is by no means exhaustive):
i) which described in relation to data centres with blades in the above example, the invention could instead be applied to a collection of computers attached to LAN or to a collection of PC motherboards inserted into rack etc. etc. (acting as servers in each case).
ii) virtualisation can be used to drive up utilisation of a server, by having that server host a number of 'virtual servers', each of which might run an application for a different customer. The same idea can be applied to 'virtual servers' as it is applied to real servers in the above embodiment.
iii) whilst in the above example each of the states of preparedness related to the loading of software, they might additionally relate to the configuring of the application for a given customer.
iv) whilst in the above example the 'pool' of servers shared by different applications included all the blade servers in the data centre, each rack could be treated as a 'pool' of servers, or each blade cabinet. Alternatively, where different blade servers (i.e. different hardware) are present in a data centre, a 'pool' could be a group of blade servers that are similar pieces of hardware.

To summarise the above disclosure, a data centre is disclosed in which an administrator is provided with an administration computer 50 which keeps a record of which of a pool of computers shared between a set of applications currently has each of a number of different software configurations. Those software configurations vary in the degree to which they are specialised to a given application or a subset of the applications supported by the pool of computers. By keeping some of the pool of computers with a software configuration which can be augmented in order to provide a subset of the supported applications, the subset of computers having that configuration can be shared between a subset of the applications supported by the pool. Because the amount of extra software required to reprogram one of those computers to provide a specific one of the subset of applications is only a fraction of the amount of software required to program a computer to provide the application, delay bounds on the deployment of one or more computers to a given application can be met whilst still allowing the sharing of resources between the subset of applications. This enables a more efficient utilisation of the computers in the data centre, and thus reduces the energy required by the data centre to support a given number of applications.

## Claims

1. A method of operating a group of interconnected computers to provide a plurality of applications between them, said method comprising:
dynamically allocating subsets of said interconnecting computers to different states of readiness to deploy different applications in response to changing demand for said applications;
wherein said states of readiness include one or more intermediate states of readiness, computers in said intermediate states of readiness being partially prepared to deploy some but not all of said plurality of applications.

2. A method according to claim 1 wherein said group of interconnected computers provide applications which handle queries received by the group via a wide-area network.

3. A method according to claim 1 in which said states of readiness include a state of having middleware loaded which middleware supports the running of components of a distributed application.

4. A computer system comprising:
a group of interconnected computers arranged in operation to provide a plurality of applications between them;
an administration computer operably connected to said plurality of interconnected computers and arranged in operation to load software onto or remove software from one or more of said plurality of interconnected computers;
said administration computer maintaining a data structure which represents, for each of a number of different software configurations, the number of said plurality of interconnected computers which have that software configuration;
said administration computer utilising said data structure to dynamically bring subsets of said interconnecting computers to respective software configurations with some but not all of those subsets consisting of computers partially prepared to provide some but not all of the applications provided by said group of interconnected computers.

5. A computer system according to claim 4 in which said administration computer further maintains an administrator-editable rule store, and said administration computer is arranged in operation to allocate said computer to said subsets in dependence upon one or more rules in said rule store.
